# EUROPEAN PATENT APPLICATION

(11) **EP 1 455 550 A2**
(43) Date of publication of application: **08.09.2004**
(21) Application number: 04075656.1
(22) Date of filing: 02.03.2004
(51) Int. Cl.: H04Q 9/00

(54) **Network mapping system**

(30) Priority: 05.03.2003 IT MI20030402
(71) Applicant: Sirti S.p.A., 20127 Milano (IT)
(72) Inventor: Cottino, Edoardo, 20050 Zoccorino (Milan) (IT)
(74) Representative: Coppo, Alessandro

(57) **Abstract**

Network mapping system which comprises a plurality of local stations and a plurality of terminal stations topologically connected together. The system has an electronic central processing unit comprising a database suitable for containing information relative to each unit to be monitored and at least one palm electronic unit that can be connected through a telecommunications network to said central unit, which can be used by an operator to collect information on each unit of the network.

## Description

The present invention concerns a network mapping system, for example for electric goods and services transportation and distribution networks.

In particular, the present invention refers to a network mapping system which supports census, installation, maintenance and status monitoring operations to be carried out on the network itself.

For the purposes of the present description, by network to which the system of the present invention can be applied we mean a network having a plurality of local stations arranged in a region and topologically connected together. Examples of networks of this type are electrical and/or telephone networks in which said local stations can be distribution substations, pilings, boxes, telephone boxes, switchboards, etc.

It is known that electrical networks are normally mapped through geographical maps in which the sites where the various parts of the network are situated are indicated. For example, for a telephone network the palings, the distribution stations and the possible telephone boxes are indicated on the map.

The realisation of mappings of all of the parts of the network can be carried out by providing an operator with a geographical map, in which the sites where there are the various local stations of the network must necessarily be at least partially indicated, who, physically visiting the sites, can complete the mapping in a more precise manner.

Possibly, the operator can be provided with a common GPS apparatus capable of detecting its position (the co-ordinates). In this way, detecting his position near to each local station, the operator can update the geographical map with greater precision.

The Applicant has observed that such a system for mapping the local stations of an electrical network necessarily foresees that an operator updates a geographical map each time he determines a new position of a local station that has not been mapped. Moreover, the position mapped by the operator is displayed manually on a geographical map. This can cause imprecision in mapping and some mapped positions, over time, can be imprecise.

The Applicant has realised an electronic mapping system for distribution networks, in which an operator can check every local station of the network and transmit the data detected from the site of the local stations in real time to a central processing unit. The system foresees providing an operator with a palm unit, capable of communicating in real time with such a central unit, and providing each local station with a transponder capable of transmitting data stored inside it in response to an inquiry of said palm unit.

An aspect of the present invention concerns a network mapping system, said network comprising a plurality of local stations and a plurality of terminal stations topologically connected together, characterised in that it comprises an electronic central processing unit comprising a database suitable for containing information relative to each unit to be monitored, at least one palm electronic unit that can be connected through a telecommunications network to said central unit, which can be used by an operator to collect information on each unit of the network.

A further aspect of the present invention concerns a palm electronic unit comprising a microprocessor processing unit, a reading/writing device for transponders, a user interface provided with a keypad and a display, characterised in that it comprises a GPRS device through which said unit can be connected through a telecommunications network to a central processing unit.

The characteristics and advantages of the system according to the present invention shall become clearer from the following description, given as an example and not for limiting purposes, of an embodiment with reference to the attached figures in which:
- figure 1 is a schematic example of a network controlled by the system according to the present invention;
- figure 2 is a block diagram of the mapping system according to the present invention;

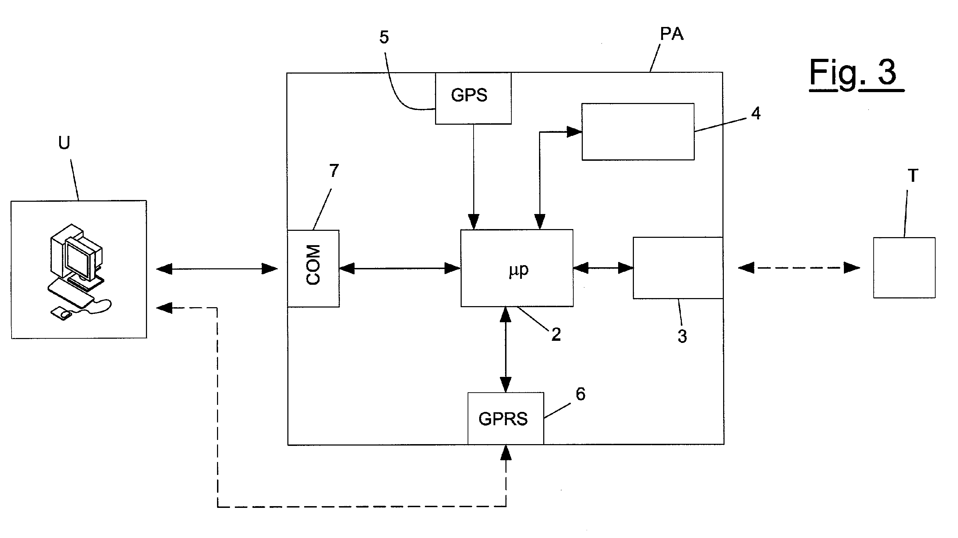

- figure 3 is a block diagram of a palm unit of the system according to the present invention.

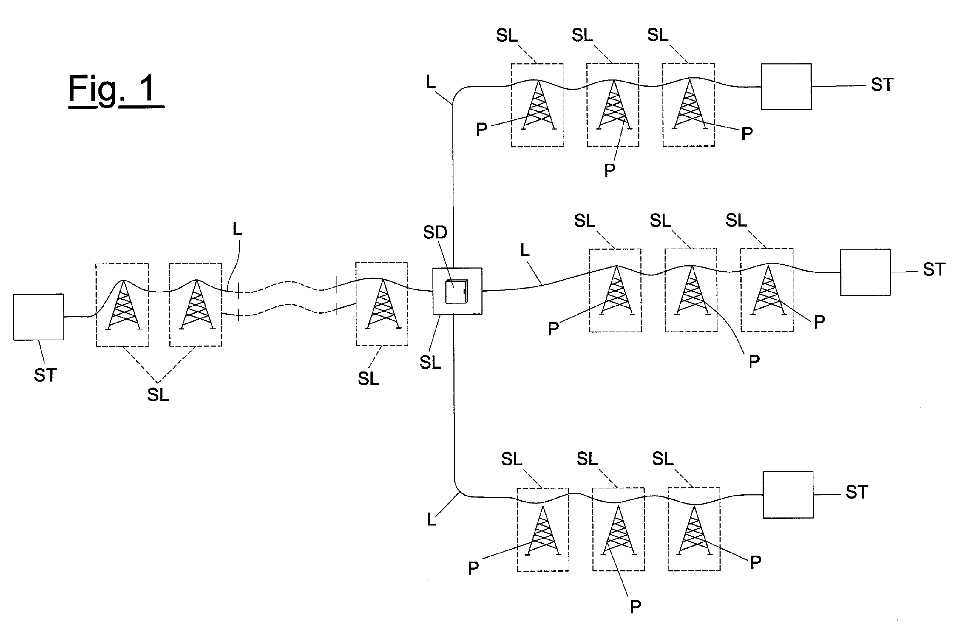

With reference to the quoted figures, an example of a network to which the present invention can be applied is an electrical network comprising a plurality of terminal stations ST and a plurality of local stations SL topologically connected together through a plurality of electrical lines L. In figure 1 the illustrated local stations refer to pilings P of lines L and to distribution stations SD.

Further examples of networks to which the present invention can be applied may also be non-electrical networks, in which there is the need to monitor the positioning and the status of the local stations, for example a network consisting of a plurality of generic pilings.

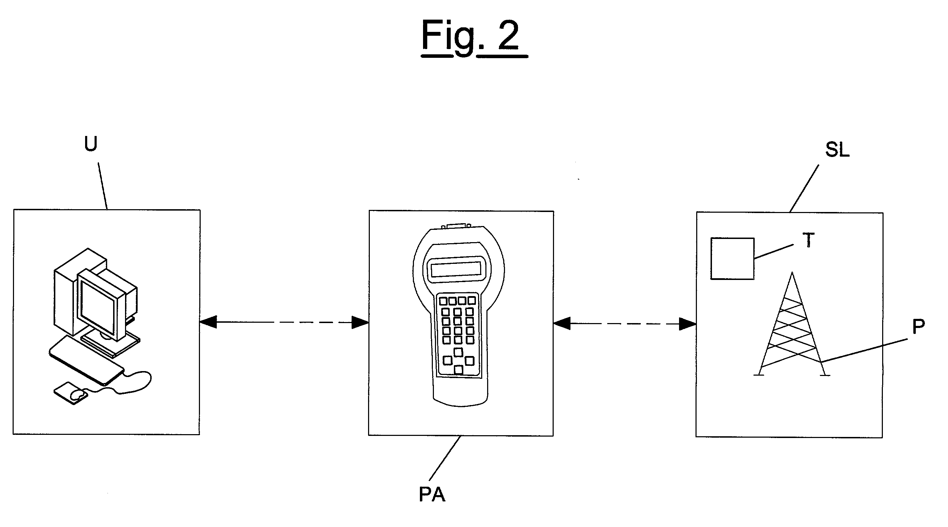

The network monitoring system according to the present invention, illustrated as an example in figure 2, comprises an electronic central processing unit U, a plurality of transponders T each associated with a local station SL of said network and at least one palm unit PA, able to be connected through a telecommunications network to said central unit.

Said central processing unit, for example an electronic calculator, is provided with a database in which data relative to the network to be monitored is stored. Moreover, such a processing unit comprises an electronic cartography program, with which the information contained in such a database is to be associated.

As an example, said database comprises, for each local station, for example for a pole of a line, the following information:
- geographical co-ordinates of the pole (Latitude and Longitude),
- pole configuration (single, combined, sustaining, coupled, etc.),
- type of pole (terminal, linear, intermediate, angle, vertex etc.),
- nature of the pole (wood, glass resin, etc.),
- pole capacity (normal, high, revised, etc.),
- pole length,
- year of construction,
- date of the ith check,
- outcome of ith check (green, yellow, red).

The central processing unit can advantageously be associated with a telecommunications network through suitable ports (modem, LAN network, etc.).

The transponder that can be associated with each local station to be monitored comprises a storage device inside which at least part of the aforementioned information of said database is stored. Said transponder is a miniaturised electronic circuit without batteries which, when suitably excited by an electromagnetic field, is able to store information that can later be read and modified.

According to the present invention, the system comprises at least one palm unit which can be used by an operator to monitor each local station of a network.

In particular, said palm unit PA comprises a microprocessor processing unit 2, a reading/writing device 3 of said transponders T and a user interface 4 which communicate with said processing unit.

The user interface preferably comprises a keypad and a display whereas the reading/writing unit 3 is provided with a suitable antenna to communicate with said transponders.

An operator, through said palm unit, is able to read the information contained by a transponder and to write further information onto the storage device of the transponder itself.

The palm unit also comprises a GPS receiver 5, a GPRS device 6, a serial communication port 7 and a battery power supply device (not shown) which supplies the various components of the unit.

The GPS receiver is suitable for determining the position of the palm unit on the earth's surface, and also the height, and is active in any point of the earth's surface. In such a way, an operator can activate the reception function and store, at a predetermined moment, its position.

The GPRS (General Packet Radio Service) device is a device that allows information to be sent and received through a telephone network.

GPRS technology allows information to be exchanged with substantial speed and exploits the "always on" connection mode, i.e. one is always connected to the network as if one had a dedicated line. Dial-up connections are not necessary. This characteristic simplifies the exploitation of the applications avoiding useless waits.

Such technology exploits so-called packet transmission which foresees network use that is proportional to the amount of data transmitted/received.

Through said GPRS device it is possible to connect such a palm unit with said central unit through a telephone network, fixed or mobile, at any moment in time that one likes.

The serial communication port allows the palm unit to be connected via cable with said central processing unit and in general with any personal computer provided with an analogous port.

The monitoring system according to the present invention sets itself the objectives of identifying every local station of a network and of registering its relevant characteristics, applying an "electronic label" containing such relevant information to each local station. The system also proposes creating a database containing all of the relevant information for every local station and creating plans of the network.

Thereafter, the system allows all of the data stored in such a central unit and in the transponders associated with the local stations to be updated following subsequent checks.

An identification operation of a local station can be carried out by an operator provided with said palm units, who goes to the site of the local station and registers its position through the GPS receiver. Moreover, if said local station is provided with a transponder the operator is able to read the information contained in it.

The data read by said palm unit can be stored inside of it or else can be sent directly in real time to said central unit through a transmission carried out by the GPRS device.

Moreover, the operator can update the data contained in the transponder of the local station or, in the case in which the local station does not possess a transponder, he can associate one with the station and at the same time store inside of it information received from said central unit and/or from said GPS and/or information typed in directly on the keypad of the palm unit.

Thus, the system of the present invention can be used in a first step to map and classify local stations of a network not yet identified. Thereafter, the system allows the information of a classified network to be updated, for example due to ordinary and/or extraordinary maintenance operations of the various stations of the network.

## Claims

1. Network mapping system, said network comprising a plurality of local stations and a plurality of terminal stations topologically connected together
**characterised in that** it comprises
- an electronic central processing unit comprising a database suitable for containing information relative to each unit to be monitored,
- at least one palm electronic unit that can be connected through a telecommunications network to said central unit, which can be used by an operator to collect information on each unit of the network.

2. System according to claim 1, comprising a transponder able to be associated with each local station of the network which contains information relative to the unit with which it is associated.

3. System according to claim 2, wherein said palm unit comprises a microprocessor processing unit, a reading/writing device of said transponders and a user interface provided with a keypad and a display.

4. System according to claim 3, wherein said palm unit comprises a GPS receiver, a GPRS device and a serial communication port.

5. System according to claim 1, wherein said network is an electrical network.

6. System according to claim 1, wherein said network is a telephone network.

7. System according to claim 2, wherein said information that can be detected by said palm unit relative to the units of the network are at least partially stored in said transponders.

8. System according to claim 4, wherein said palm unit sends the detected information in real time to said central unit through said GPRS device.

9. System according to claim 4, wherein said palm unit sends the detected information to said central unit through said serial communication port.

10. System according to claim 4, wherein said palm unit detects the geographical position of said units of the network.

11. System according to claim 1, wherein said central unit comprises an electronic cartographic program, with which the information contained in such a database is to be associated.

12. System according to claim 1, wherein said central processing unit can be associated with a telecommunications network.

13. Palm electronic unit comprising a microprocessor processing unit, a reading/writing device for transponders, a user interface provided with a keypad and a display, **characterised in that** it comprises a GPRS device through which said unit can be connected through a telecommunications network to a central unit.

14. Palm unit according to claim 13, also comprising a GPS receiver.
